# EUROPÄISCHE PATENTSCHRIFT

(11) **EP 4 178 840 B1**
(45) Veröffentlichungstag und Bekanntmachung des Hinweises auf die Patenterteilung: **29.05.2024**
(21) Anmeldenummer: 21739114.3
(22) Anmeldetag: 02.07.2021
(51) Int. Cl.: B60T 15/02, B60T 15/18

(54) **PNEUMATISCHES DRUCKREGELVENTIL FÜR EIN BREMSSTEUERUNGSSYSTEM EINES SCHIENENFAHRZEUGS SOWIE PNEUMATISCHES STEUERVENTIL FÜR EIN BREMSSTEUERUNGSSYSTEM EINES SCHIENENFAHRZEUGS**
PNEUMATIC PRESSURE REGULATING VALVE FOR A BRAKE CONTROL SYSTEM OF A RAIL VEHICLE AND PNEUMATIC CONTROL VALVE FOR A BRAKE CONTROL SYSTEM OF A RAIL VEHICLE
VANNE DE RÉGULATION DE PRESSION PNEUMATIQUE POUR UN SYSTÈME DE COMMANDE DE FREIN D'UN VÉHICULE FERROVIAIRE ET VANNE DE COMMANDE PNEUMATIQUE POUR UN SYSTÈME DE COMMANDE DE FREIN D'UN VÉHICULE FERROVIAIRE

(30) Priorität: 07.07.2020 DE 102020117846
(43) Veröffentlichungstag der Anmeldung: 17.05.2023
(73) Patentinhaber: KNORR-BREMSE Systeme für Schienenfahrzeuge GmbH, 80809 München (DE)
(72) Erfinder: AMANN, Klaus, 85774 Unterföhring (DE)
(86) Internationale Anmeldenummer: PCT/EP2021/068292
(87) Internationale Veröffentlichungsnummer: WO 2022/008364

(56) Entgegenhaltungen:
- WO-A1-2014/040933
- WO-A1-2014/040933
- DE-A1- 10 354 248
- GB-A- 754 192
- GB-A- 1 174 243

## Beschreibung

Die Erfindung betrifft ein pneumatisches Druckregelventil für ein Bremssteuerungssystem eines Schienenfahrzeugs sowie ein pneumatisches Steuerventil für ein Bremssteuerungssystem eines Schienenfahrzeugs.

Pneumatische Bremsanlagen für die direkte Bremssteuerung für Schienenfahrzeuge werden in der Regel mit einem Versorgungsdruck von 8 bis 10 bar betrieben. Der Versorgungsdruck wird zur Generierung des Bremszylinderdrucks C, der für eine Voll- und Schnellbremse üblicherweise auf 3,8 bar begrenzt ist, verwendet. Ein Druckregelventil oder auch Druckminderventil im Vorsteuerkreis dient dabei dem Schutz der Bremsmechanik vor Überlastung, falls der maximale Bremszylinderdruck deutlich überschritten wird. Wenn die Bremsanlage am Schienenfahrzeug abgesperrt werden soll, wird der Versorgungsdruck pneumatisch getrennt und die Bremsanlage entlüftet. Damit bei einer solchen Deaktivierung der Bremsanlage, d.h. beim Entlüften des Versorgungsdrucks, kein Bremszylinderdruck mehr anliegt, ist der Bremszylinderdruck ebenfalls zu entlüften, genauer gesagt, das den Bremszylinderdruck erzeugende Fluidvolumen. Hierzu wird bislang ein separates Rückschlagventil am Auslass des Relaisventils verwendet.

Das den Versorgungsdruck begrenzende Druckminderventil liegt in Reihe mit der geregelten Bremsansteuerung, so dass eine Vollbremsung im Betriebsbremsfall durch das Druckminderventil verzögert wirken kann und somit erhöht eingestellt werden muss. Beispielsweise wird der maximale Vollbremsdruck bei der Betriebsbremse auf 3,8 bar und der in der Notbremsschleife auf 3,9 bar eingestellt.

Zudem werden leichte Undichtigkeiten im Druckminderventil über das Relais verstärkt und sind oft Ursache für Fehler und Reklamationen.

Da das Druckminderventil nur einen Pfad im Vorsteuerkreis begrenzt, werden andere Pfade, die ebenfalls Einfluss auf den Bremsdruck haben oder haben können, nicht begrenzt.

Die Patentschrift GB 754,192 A offenbart ein Ventil zur Begrenzung des Druckes in der Leitung zum Bremszylinder, wobei sich die Wirkung des Ventils nicht im Betrieb über ein Druckregelventil steuern lässt.

In Anbetracht der vorstehenden Ausführungen ist es somit Aufgabe der vorliegenden Erfindung, ein pneumatisches Druckregelventil für ein Bremssteuerungssystem eines Schienenfahrzeugs und ein pneumatisches Steuerventil für ein Bremssteuerungssystem eines Schienenfahrzeugs bereitzustellen, die den maximalen Bremsdruck zum Schutz der Bremsmechanik zuverlässig begrenzen und beim Absperren der Bremsanlage mit dem Entlüften des Versorgungsdrucks selbsttätig den Bremszylinderdruck entlüften.

Die Aufgabe wird durch ein pneumatisches Druckregelventil für ein Bremssteuerungssystem eines Schienenfahrzeugs sowie ein pneumatisches Steuerventil für ein Bremssteuerungssystem eines Schienenfahrzeugs gemäß den unabhängigen Ansprüchen gelöst. Vorteilhafte Weiterbildungen der Erfindung sind in den abhängigen Ansprüchen enthalten.

Erfindungsgemäß weist ein pneumatisches Druckregelventil für ein Bremssteuerungssystem eines Schienenfahrzeugs, einen ersten mit einem Bremsdruck beaufschlagbaren Druckraum und einen zweiten mit einem vorbestimmten einstellbaren Druck beaufschlagbaren Druckraum auf, wobei der erste Druckraum und der zweite Druckraum über einen Druckausgleichskolben gegeneinander abgedichtet sind, und wobei der Druckausgleichskolben dazu ausgebildet ist, eine fluidische Verbindung vom ersten Druckraum zu einem Entlüftungskanal zu öffnen, wenn die Druckwirkung des Drucks auf den Druckausgleichskolben im ersten Druckraum größer ist als die Druckwirkung des Drucks auf den Druckausgleichskolben im zweiten Druckraum.

Der Druckausgleichskolben kann als bewegliches Bauelement ausgeführt sein. Die Bewegung erfolgt dabei zwischen zumindest einer ersten Position, in der der Druckausgleichskolben die fluidische Verbindung vom ersten Druckraum zum Entlüftungskanal verschließt, und zumindest einer zweiten Position, in der der Druckausgleichskolben die fluidische Verbindung vom ersten Druckraum zum Entlüftungskanal öffnet. In der zumindest einen ersten Position ist die Druckwirkung des Drucks auf den Druckausgleichskolben im ersten Druckraum kleiner oder gleich der Druckwirkung des Drucks auf den Druckausgleichskolben im zweiten Druckraum. Die Druckwirkung muss dabei nicht dem jeweils in den Druckräumen herrschenden Drücken entsprechen, sondern kann gemäß einer Flächenausgestaltung des Druckausgleichskolbens, auf die der Druck in Bewegungsrichtung wirkt, angepasst werden. Alternativ zu einem beweglichen Bauelement kann der Druckausgleichskolben auch durch andere druckbeaufschlagte Bauelemente nachgebildet werden. Diese druckbeaufschlagten Bauelemente weisen ein vergleichbares Wirkprinzip, also ein vom Druckverhältnis des ersten und zweiten Druckraums abhängiges Öffnen und Schließen des Entlüftungskanals, auf.

Durch die über das eingestellte Druckverhältnis mögliche Regulierung des Bremsdrucks können Wartungsintervalle reduziert werden, wie sie beispielsweise zur notwendigen regelmäßigen Überprüfung der Federeinstellung bei Sicherheitsventilen vorzusehen wären. Zudem wird eine Dichtheit für den Bremsdruck sichergestellt, solange die Druckwirkung auf den Druckausgleichskolben im zweiten Druckraum größer oder gleich der Druckwirkung auf den Druckausgleichskolben im ersten Druckraum ist. Die vorstehende Ausgestaltung erfordert vergleichsweise wenig Bauraum und ist kostengünstig umsetzbar.

In einer Ausgestaltung ist der vorbestimmte einstellbare Druck derart vorbestimmt, dass der Druckausgleichskolben die fluidische Verbindung vom ersten Druckausgleichsraum zum Entlüftungskanal öffnet, wenn der Bremsdruck einen vorbestimmten maximalen Bremsdruck überschreitet.

Demnach wird der Druckausgleichskolben in die zumindest eine zweite Position bewegt, wenn die zur Überschreitung des maximalen Bremsdrucks korrespondierende Druckwirkung auf den Druckausgleichskolben im ersten Druckraum anliegt. Die Bremsmechanik kann somit sicher geschützt werden.

Insbesondere ist der Druckausgleichskolben dazu ausgebildet, die fluidische Verbindung vom ersten Druckausgleichsraum zum Entlüftungskanal zu öffnen, wenn der vorbestimmte einstellbare Druck unterschritten wird.

Das Druckverhältnis ist demnach so eingestellt, dass eine Verringerung der Druckwirkung auf den Druckausgleichskolben im zweiten Druckraum ausgehend vom vorbestimmten einstellbaren Druck den Druckausgleichskolben in die zumindest eine zweite Position bewegt. Das den Bremsdruck bedingende Fluidvolumen kann somit automatisch durch Druckreduzierung im zweiten Druckraum entlüftet werden.

Gemäß einer Weiterbildung weist der Druckausgleichskolben einen dem ersten Druckraum zugewandten ersten Kolbenabschnitt und einen dem zweiten Druckraum zugewandten zweiten Kolbenabschnitt auf, wobei die dem ersten Druckraum zugewandte und mit dem Bremsdruck beaufschlagbare erste Stirnfläche des ersten Kolbenabschnitts als Ventilsitz kleiner ist als die dem zweiten Druckraum zugewandte und mit dem vorbestimmten einstellbaren Druck beaufschlagbare zweite Stirnfläche des zweiten Kolbenabschnitts.

Die für die Druckwirkung in Bewegungsrichtung des Druckausgleichskolbens relevante Fläche ist folglich im zweiten Druckraum kleiner als im ersten Druckraum. Hierdurch wird bei gleicher Druckbeaufschlagung der jeweiligen Flächen eine größere Druckwirkung im zweiten Druckraum erzielt. Entsprechend kann der erforderliche vorbestimmte einstellbare Druck im zweiten Druckraum, um den Druckausgleichskolben in der zumindest einen ersten Position zu halten, geringer gewählt werden als der maximal zu tolerierende Bremsdruck.

In einer Ausführung ist der Druckausgleichskolben als Doppelzylinder ausgebildet.

Durch die Verwendung eines Doppelzylinders lässt sich ein Druckausgleichskolben mit jeweils unterschiedlichen Wirkflächen in einfacher Weise umsetzen. Der Durchmesser der beidseitigen Kolbenabschnittsstirnflächen korrespondiert dabei zum vorzusehenden Druckverhältnis, bei der der Druckausgleichskolben in der zumindest einen ersten Position gehalten werden soll. Die jeweiligen Doppelzylinderabschnitte können direkt in Bewegungsrichtung des Druckausgleichkolbens aneinander liegen oder über ein Zwischenelement miteinander verbunden sein.

Gemäß einer Ausgestaltung ist der vorbestimmte einstellbare Druck im zweiten Druckraum über einen Versorgungsdruck einstellbar ist.

Dies hat den Vorteil, dass der ohnehin vorhandene Versorgungsdruck genutzt werden kann, so dass keine zusätzlichen Druckquellen erforderlich sind. Insbesondere wird aber auch bei Wegfall des Versorgungsdrucks der vorbestimmte eingestellte Druck gleichermaßen reduziert, so dass das den Bremsdruck bedingende Fluidvolumen in Abhängigkeit des Versorgungsdrucks automatisch entlüftet werden kann. Demnach kann der vorbestimmte eingestellte Druck, bei dem der Druckausgleichskolben in der zumindest einen ersten Position gehalten wird, zu einem Mindestversorgungsdruck korrespondieren. Das heißt, ein vorbestimmter Wert des Mindestversorgungsdrucks bedingt den vorbestimmten einstellbaren Druck im zweiten Druckraum. Insbesondere verändert sich der Druck im zweiten Druckraum dabei, wenn der Vorsorgungsdruck den Mindestversorgungsdruck unterschreitet. Der Mindestversorgungsdruck kann auch einem maximalen Versorgungsdruck entsprechen.

In einer Weiterbildung weist das Druckregelventil einen dritten mit dem Versorgungsdruck beaufschlagbaren Druckraum und ein Kolbenventil auf, wobei das Kolbenventil dazu ausgebildet ist, eine fluidische Verbindung zwischen dem dritten Druckraum und dem zweiten Druckraum zu öffnen, wenn ein Druck im dritten Druckraum durch den Versorgungsdruck kleiner als der vorbestimmte einstellbare Druck ist, und die fluidische Verbindung zwischen dem dritten Druckraum und dem zweiten Druckraum über einen Ventilsitz zu sperren, wenn der Druck im dritten Druckraum größer oder gleich dem vorbestimmten einstellbaren Druck ist.

Demnach kann der vorbestimmte einstellbare Druck im zweiten Druckraum über das Kolbenventil eingestellt werden. Liegt kein Versorgungsdruck an, befindet sich das Kolbenventil in einer Stellung, in der die fluidische Verbindung zwischen dem zweiten und dritten Druckraum geöffnet. Wird nun der dritte Druckraum mit dem Versorgungsdruck beaufschlagt, wird die fluidische Verbindung zwischen dem zweiten und dritten Druckraum über das Kolbenventil geschlossen, wenn im zweiten Druckraum der vorbestimmte einstellbare Druck gemäß einem vorbestimmten Mindestversorgungsdruck erreicht wird. Umgekehrt kann das Kolbenventil die fluidische Verbindung zwischen dem zweiten und dritten Druckraum wieder öffnen, wenn der vorbestimmte Mindestversorgungsdruck unterschritten wird. In einer Ausgestaltung kann das Kolbenventil derart ausgebildet sein, dass es mit einmal eingestelltem Kräftegleichgewicht und damit abgedichtetem zweiten Druckraum unabhängig vom Versorgungsdruck zunächst geschlossen bleibt. Zur Öffnung des Kolbenventils wäre somit eine anderweitige Entlüftung, also eine zusätzliche öffenbare fluidische Verbindung vorzusehen, wie dies folgend noch beschrieben wird.

Insbesondere weist das Druckregelventil einen vierten Druckraum auf, der über einen Kanal, der das Kolbenventil durchläuft, mit dem zweiten Druckraum fluidisch verbunden ist, wobei der dritte Druckraum zwischen dem zweiten Druckraum und dem vierten Druckraum angeordnet ist und eine im dritten Druckraum angeordnete Flachmembran, durch die das Kolbenventil verläuft, eine fluidische Verbindung zwischen dem dritten Druckraum und dem vierten Druckraum ermöglicht.

Wenn der Druck im zweiten Druckraum und somit auch der Druck im vierten Druckraum größer sind als der Druck im dritten Druckraum wird die Abdichtung über die Flachmembran zwischen dem vierten Druckraum und dem dritten Druckraum aufgehoben. Dadurch strömt Luft aus dem vierten Druckraum in den dritten Druckraum. Aufgrund des Kanals verringert sich dadurch auch der Druck im zweiten Druckraum, so dass das Kolbenventil die fluidische Verbindung zwischen dem zweiten Druckraum und dem vierten Druckraum öffnet, so dass der zweite Druckraum entlüftet wird. Hierdurch fällt gleichzeitig der Druck im zweiten Druckraum unter den vorbestimmten eingestellten Druck, so dass der Druckausgleichkolben in die zumindest eine zweite Position bewegt wird. Somit wird der erste Druckraum entlüftet.

Die Entlüftung über das Öffnen der Flachmembran kann somit eine vorstehend adressierte zusätzliche Entlüftungsmöglichkeit darstellen, so dass das Kolbenventil zunächst unabhängig vom Versorgungsdruck nach Abdichtung des zweiten Druckraums über den Ventilsitz in der geschlossenen Position gehalten wird und erst über die Bedingung zum Öffnen der Flachmembran eine Entlüftung des zweiten Druckraums erfolgt. In einem solchen Fall ist der Kolben des Kolbenventils im zweiten Druckraum angeordnet. Der Kolben kann aber auch im dritten Druckraum angeordnet sein, so dass das Kräftegleichgewicht zum Abdichten des zweiten Druckraums direkt über das Druckverhältnis im zweiten und dritten Druckraum bestimmt wird.

In einer Ausgestaltung ist das Kolbenventil über ein Federelement in axialer Richtung druckbeaufschlagt.

Über das Federelement wird das Kolbenventil somit entgegen der Schließrichtung des Kolbenventils vorgespannt. Hierdurch kann der vorbestimmte einstellbare Druck im zweiten Druckraum in Abhängigkeit der Federkraft eingestellt werden. Je größer die Federkraft ist, umso desto größer ist der vorbestimmte einstellbare Druck, der bei Schließen der fluidischen Verbindung zwischen dem zweiten Druckraum und dem vierten Druckraum im zweiten Druckraum vorliegt.

Gemäß einer Ausführung beträgt der vorbestimmte einstellbare Druck im Wesentlichen 20% des Versorgungsdrucks.

Bei entsprechender Ausgestaltung kann daher der Druckausgleichskolben schon bei einem vergleichsweise geringen vorbestimmten einstellbaren Druck in der zumindest einen ersten Position gehalten werden.

In einem weiteren Aspekt betrifft die Erfindung ein pneumatisches Steuerventil für ein Bremssteuerungssystem eines Schienenfahrzeugs, das ein pneumatisches Druckregelventil, wie vorstehend beschrieben, aufweist.

Hierdurch kann ein Bremsdruck unabhängig von einem Versorgungsdruck umgesetzt werden. Durch das pneumatische Druckregelventil kann eine integrierte Rückschlagfunktion des pneumatischen Steuerventils erfolgen.

Im Folgenden wird die Erfindung anhand einer Ausführungsform unter Hinzuziehung der beigefügten Figuren näher erläutert. Die Figuren zeigen im Einzelnen:
**Figur 1** eine vereinfachte schematische Darstellung eines Bremssteuerungssystems für Schienenfahrzeuge mit einem pneumatischen Steuerventil, das ein erfindungsgemäßes pneumatisches Druckregelventil umfasst.
**Figur 2** eine schematische Querschnittsansicht eine Druckregelventils, wie dieses in Fig. 1 anwendbar ist, in einer exemplarischen Ausführungsform.

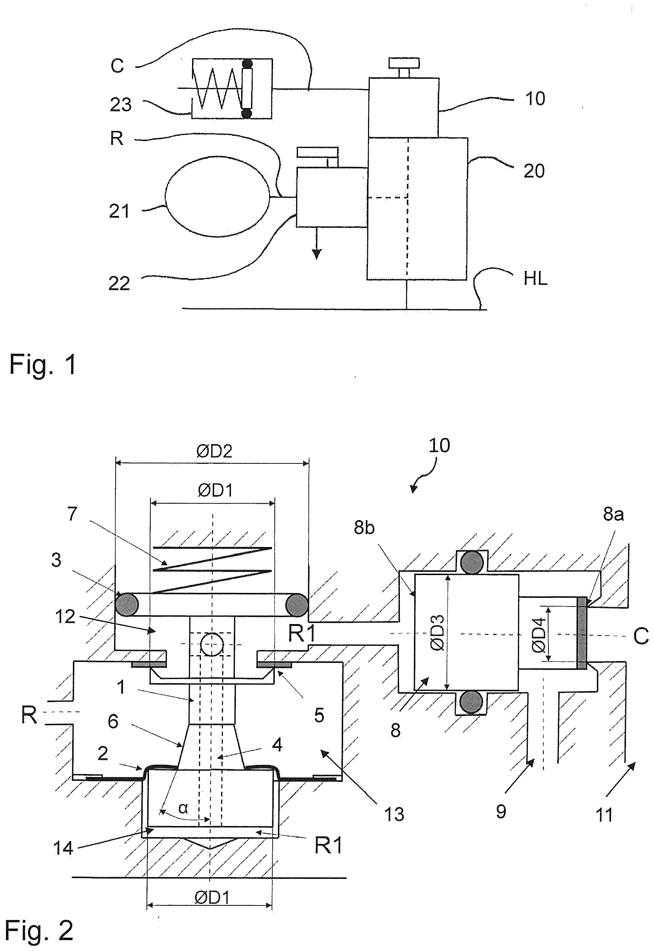

**Figur 1** zeigt eine vereinfachte schematische Darstellung eines Bremssteuerungssystems für Schienenfahrzeuge. An einer sich durch den gesamten Zug erstreckenden Hauptluftleitung HL ist ein Steuerventil 20 angeordnet. An dem Steuerventil 20 ist wiederum ein Vorratsluftbehälter 21 angeordnet, der einen in das Steuerventil 20 mündenden Versorgungsdruck R generiert und mit einem Hahn 22 entlüftet werden kann. Das Steuerventil 20 steuert die Füllung des Vorratsluftbehälters 21. Im Steuerventil 20 integriert befindet sich ein pneumatisches Druckregelventil 10. Der Bremsdruck C mündet in einen Bremszylinder 23, der den Druck in eine Kraft für eine - hier nicht dargestellte - Reibungsbremse umwandelt. Das pneumatische Druckregelventil 10 dient zur Druckbegrenzung für den unter den Bremsdruck C stehenden Bremszylinder 23. Wenn der Hahn 22 geöffnet und der Vorratsluftbehälter 21 somit entlüftet wird, wird ebenso auch die Bremsdruckleitung C über die Rückschlagventilfunktion im pneumatischen Druckregelventil 10 entlüftet.

Gemäß **Figur 2** weist das pneumatische Druckregelventil vier Druckräume 11, 12, 13 und 14 auf, die mit Druckluft beaufschlagbar sind. Der erste Druckraum 11 kann mit einem Bremsdruck C beaufschlagt werden. Dabei muss der erste Druckraum 11 nicht vollständig vom Gehäuse des Druckregelventils 10 umschlossen sein, sondern kann, wie in der dargestellten Ausführungsform lediglich durch ein Raumvolumen eines Gehäuseeingangs vom Druckregelventil 10 ausgebildet werden. Der übrige Teil des abgedichteten Fluidraums zum Druckaufbau kann somit auch durch andere Komponenten gebildet werden. Der erste Druckraum 11 wird über einen Druckausgleichskolben 8 in Zusammenwirken mit einem Dichtelement von dem zweiten Druckraum 12 abgedichtet. Der Druckausgleichskolben 8 ist in Abhängigkeit des Druckverhältnisses zwischen dem Bremsdruck C im ersten Druckraum 11 und einem vorbestimmten einstellbaren Druck R1 im zweiten Druckraum 12 in axialer Richtung bewegbar. Hierzu ist der Druckausgleichskolben 8 als Doppelzylinder ausgebildet, der einen ersten Kolbenabschnitt 8a und einen sich in axialer Richtung an diesen anschließenden zweiten Kolbenabschnitt 8b aufweist. Die dem zweiten Kolbenabschnitt 8b abgewandte Stirnfläche des ersten Kolbenabschnitts 8a schließt eine fluide Verbindung zwischen dem ersten Druckraum 11 und einem Entlüftungskanal 9, wenn die Druckwirkung des Drucks im zweiten Druckraum 12 größer oder gleich der Druckwirkung des Drucks im ersten Druckraum 11 ist. Die Druckwirkung ergibt sich über den in den jeweiligen Druckräumen 11 und 12 herrschenden Druck in Verbindung mit den jeweiligen Stirnflächen. Die Stirnfläche des ersten Kolbenabschnitts 8a weist einen Durchmesser D4 auf, der kleiner ist als der Durchmesser D3 der Stirnfläche des zweiten Kolbenabschnitts 8b. Somit schließt der Druckausgleichskolben 8 die fluide Verbindung zwischen dem ersten Druckraum 11 und dem Entlüftungskanal 9, solange R1 ≥ C * (D4²/D3²) ist. Der Druckausgleichskolben 8 wird automatisch aus dieser ersten Position in eine zweite Position, bei der die fluide Verbindung zwischen dem ersten Druckraum 11 und dem Entlüftungskanal 9 geöffnet ist, bewegt, wenn R1 < C * (D4²/D3²). Der erste Druckraum wird demnach entlüftet, wenn der Bremsdruck C einen vorbestimmten maximalen Bremsdruck überschreitet oder beispielsweise der Druck im zweiten Druckraum durch Entlüftung reduziert wird.

Der Druck R1 wird in der dargestellten Ausführungsform über den dritten Druckraum 13 in Zusammenwirken mit einem Kolbenventil 1 durch einen Versorgungsdruck R eingestellt. Hierzu ist der zweite Druckraum 12 über einen Kolben 3 und einen an einem Ventilstößel 6 angeordneten Ventilsitz 5 abdichtbar. Der Kolben 3 ist im Druckregelventil 10 in axialer Richtung des Ventilstößels 6 bidirektional bewegbar und in radialer Richtung über ein Dichtelement zum Gehäuse hin abgedichtet. Auf der dem Ventilstößel 6 abgewandten Seite des Kolbens 3 ist ein vorgespanntes Federelement 7 angeordnet, über dessen Federkraft in axialer Richtung auf den Kolben 3 und somit den Ventilstößel 6 wirkt.

Zur Druckentlastung ist der zweite Druckraum 12 über einen Kanal 4, der in axialer Richtung durch den Ventilstößel 6 verläuft, mit dem vierten Druckraum 14 verbunden. Zwischen dem zweiten Druckraum 12 und dem vierten Druckraum 14 ist der dritte Druckraum 13 angeordnet. Der dritte Druckraum ist einerseits über den Ventilsitz 5 zum zweiten Druckraum 12 und andererseits über eine Flachmembran 2 zum vierten Druckraum 14 abdichtbar.

Ausgehend von einem entlüfteten dritten Druckraum 13 ist das Kolbenventil 1 geöffnet, so dass der zweite Druckraum 12 und der dritte Druckraum 13 in fluidischer Verbindung stehen. Bei Einleitung des Versorgungsdrucks R strömt Druckluft aus dem dritten Druckraum 13 in den zweiten Druckraum 12 bis der Ventilsitz 5 mit Erreichen des vorbestimmten einstellbaren Drucks R1 den zweiten Druckraum 12 vom dritten Druckraum 13 abdichtet. Das Kolbenventil 1 wird nun über den vorbestimmten einstellbaren Druck R1 über das Kräftegleichgewicht zwischen dem Federelement 7 und dem vorbestimmten einstellbaren Druck R1 in der geschlossenen Position gehalten.

Der zweite Druckraum 12 kann nach Einstellung des vorbestimmten eingestellten Drucks R1 nun über Öffnen der Flachmembran 2 und damit einhergehender Aufhebung des Kräftegleichgewichts zwischen Federelement 7 und Kolben 3 entlüftet werden. Wenn der über den Kanal 4 im vierten Druckraum 14 vorliegende Druck größer ist als der Druck im dritten Druckraum 13, öffnet die Flachmembran 2. Hierdurch strömt Druckluft aus dem vierten Druckraum 14 und somit auch aus dem zweiten Druckraum 12 in den dritten Druckraum 13. Aufgrund des Druckabfalls im zweiten Druckraum 12 wird das Kräftegleichgewicht am Kolben 3 aufgehoben und der Kolben über die Federkraft in die Öffnungsrichtung des Kolbenventils 1 bewegt. Der Ventilsitz 5 liegt folglich nicht mehr an, so dass auch die fluidische Verbindung zwischen dem zweiten Druckraum 12 und dem dritten Druckraum 13 geöffnet wird.

Mit Entlüftung des zweiten Druckraums 12 wird durch die Aufhebung des Kräftegleichgewichts am Druckausgleichskolben 8 dann auch der erste Druckraum 11 entlüftet.

Die Erfindung ist nicht auf die beschriebenen Ausführungsformen beschränkt. Auch wenn beispielsweise das Druckausgleichsventil im beschriebenen Ausführungsbeispiel einen vierten Druckraum 14 umfasst, über den der zweite Druckraum 12 entlüftbar ist, kann dieser entfallen. Der Kolben 3 des Kolbenventils kann beispielsweise gleichzeitig als Ventilsitz fungieren und im dritten Druckraum angeordnet sein, so dass eine Entlüftung direkt über die Aufhebung des Kräftegleichgewichts über die jeweils im zweiten Druckraum 12 und dritten Druckraum 13 auf den Kolben 3 wirkenden Drücke bzw. deren Veränderung erfolgen werden kann. Das Druckregelventil kann ebenso für ein Bremssteuerungssystem für Schienenfahrzeuge mit direkt wirkender Bremssteuerung verwendet werden. Hierbei wird ein direkt generierter Bremsvorsteuerdruck Cv über ein Relaisventil, das ebenso mit einem Versorgungsdruck R versorgt wird, direkt in den Bremszylinderdruck C umgesetzt. Der Bremszylinderdruck C kann hierbei 1:1 dem Bremszylindervorsteuerdruck Cv entsprechen, aber auch abhängig von Fahrzeugbeladung, Fahrzeuggeschwindigkeit, o.a. in einem anderen Verhältnis zum Bremszylindervorsteuerdruck Cv stehen, abhängig vom Relaisventiltyp. Der Aufbau korrespondiert zu der in Figur 1 gezeigten Darstellung, wobei die Fig. 1 gezeigte Hauptluftleitung HL der Zuleitung des Bremszylindervorsteuerdruck Cv und das inFig. 1 eingetragene Steuerventil 20 dem Relaisventil entspricht.

### BEZUGSZEICHENLISTE

- 1: Kolbenventil
- 2: Flachmembran
- 3: Kolben
- 4: Kanal
- 5: Ventilsitz
- 6: Ventilstößel
- 7: Federelement
- 8: Druckausgleichskolben
- 8a: erster Kolbenabschnitt
- 8b: zweiter Kolbenabschnitt
- 9: Entlüftungskanal
- 10: Druckregelventil
- 11: erster Druckraum
- 12: zweiter Druckraum
- 13: dritter Druckraum
- 14: vierter Druckraum
- 20: Steuerventil
- 21: Vorratsluftbehälter
- 22: Hahn
- 23: Bremszylinder
- C: Bremsdruck
- Cv: Bremsvorsteuerdruck
- D3: zweite Stirnfläche
- D4: erste Stirnfläche
- HL: Hauptluftleitung
- R: Versorgungsdruck
- R1: einstellbarer Druck

## Patentansprüche

1. Pneumatisches Druckregelventil (10) für ein Bremssteuerungssystem eines Schienenfahrzeugs, aufweisend:
einen ersten mit einem Bremsdruck (C) beaufschlagbaren Druckraum (11) und
einen zweiten mit einem vorbestimmten einstellbaren Druck (R1) beaufschlagbaren Druckraum (12),
wobei der erste Druckraum (11) und der zweite Druckraum (12) über einen Druckausgleichskolben (8) gegeneinander abgedichtet sind, und
wobei der Druckausgleichskolben (8) dazu ausgebildet ist, eine fluidische Verbindung vom ersten Druckraum (11) zu einem Entlüftungskanal (9) zu öffnen, wenn die Druckwirkung des Drucks auf den Druckausgleichskolben (8) im ersten Druckraum (11) größer ist als die Druckwirkung des Drucks auf den Druckausgleichskolben (8) im zweiten Druckraum (12).

2. Druckregelventil (10) nach Anspruch 1, wobei der vorbestimmte einstellbare Druck (R1) derart vorbestimmt ist, dass der Druckausgleichskolben (8) die fluidische Verbindung vom ersten Druckausgleichsraum (11) zum Entlüftungskanal (9) öffnet, wenn der Bremsdruck (C) einen vorbestimmten maximalen Bremsdruck überschreitet.

3. Druckregelventil (10) nach Anspruch 1 oder 2, wobei der Druckausgleichskolben (8) dazu ausgebildet ist, die fluidische Verbindung vom ersten Druckausgleichsraum (11) zum Entlüftungskanal (9) zu öffnen, wenn der vorbestimmte einstellbare Druck (R1) unterschritten wird.

4. Druckregelventil (10) nach einem der vorherigen Ansprüche, wobei der Druckausgleichskolben (8) einen dem ersten Druckraum (11) zugewandten ersten Kolbenabschnitt (8a) und einen dem zweiten Druckraum (12) zugewandten zweiten Kolbenabschnitt (8b) aufweist, wobei die dem ersten Druckraum (11) zugewandte und mit dem Bremsdruck (C) beaufschlagbare erste Stirnfläche (D4) des ersten Kolbenabschnitts (8a) als Ventilsitz kleiner ist als die dem zweiten Druckraum (12) zugewandte und mit dem vorbestimmten einstellbaren Druck (R1) beaufschlagbare zweite Stirnfläche (D3) des zweiten Kolbenabschnitts (8b).

5. Druckregelventil (10) nach Anspruch 4, wobei der Druckausgleichskolben (8) als Doppelzylinder ausgebildet ist.

6. Druckregelventil (10) nach einem der vorherigen Ansprüche, wobei der vorbestimmte einstellbare Druck (R1) im zweiten Druckraum (12) über einen Versorgungsdruck (R) einstellbar ist.

7. Druckregelventil (10) nach Anspruch 6, wobei das Druckregelventil (10) einen dritten mit dem Versorgungsdruck (R) beaufschlagbaren Druckraum (13) und ein Kolbenventil (1) aufweist, wobei das Kolbenventil (1) dazu ausgebildet ist, eine fluidische Verbindung zwischen dem dritten Druckraum (13) und dem zweiten Druckraum (12) zu öffnen, wenn ein Druck im dritten Druckraum (13) durch den Versorgungsdruck (R) kleiner als der vorbestimmte einstellbare Druck (R1) ist, und die fluidische Verbindung zwischen dem dritten Druckraum (13) und dem zweiten Druckraum (12) über einen Ventilsitz (5) zu sperren, wenn der Druck im dritten Druckraum (13) größer oder gleich dem vorbestimmten einstellbaren Druck (R1) ist.

8. Druckregelventil (10) nach Anspruch 7, wobei das Druckregelventil (10) einen vierten Druckraum (14) aufweist, der über einen Kanal (4), der das Kolbenventil (1) durchläuft, mit dem zweiten Druckraum (12) fluidisch verbunden ist, wobei der dritte Druckraum (13) zwischen dem zweiten Druckraum (12) und dem vierten Druckraum (14) angeordnet ist und eine im dritten Druckraum (13) angeordnete Flachmembran (2), durch die das Kolbenventil (1) verläuft, eine fluidische Verbindung zwischen dem dritten Druckraum (13) und dem vierten Druckraum (14) ermöglicht.

9. Druckregelventil (10) nach Anspruch 7 oder 8, wobei das Kolbenventil (1) über ein Federelement (7) in axialer Richtung druckbeaufschlagt ist.

10. Druckregelventil (10) nach einem der Ansprüche 6 bis 9, wobei der vorbestimmte einstellbare Druck (R1) im Wesentlichen 20% des Versorgungsdrucks (R) beträgt.

11. Pneumatisches Steuerventil (20) oder Relaisventil für ein Bremssteuerungssystem eines Schienenfahrzeugs aufweisend ein pneumatisches Druckregelventil (10) nach einem der Ansprüche 1 bis 10.

## Claims

1. A pneumatic pressure-regulating valve (10) for a brake control system of a rail vehicle, having:
a first pressure chamber (11), to which a brake pressure (C) can be applied, and a second pressure chamber (12), to which a predetermined settable pressure (R1) can be applied,
wherein the first pressure chamber (11) and the second pressure chamber (12) are sealed off with respect to one another by means of a pressure-equalizing piston (8), and
wherein the pressure-equalizing piston (8) is configured to open a fluidic connection from the first pressure chamber (11) to a ventilation channel (9) if the pressure action of the pressure on the pressure-equalizing piston (8) in the first pressure chamber (11) is greater than the pressure action of the pressure on the pressure-equalizing piston (8) in the second pressure chamber (12).

2. The pressure-regulating valve (10) as claimed in claim 1, wherein the predetermined settable pressure (R1) is predetermined such that the pressure-equalizing piston (8) opens the fluidic connection from the first pressure-equalizing chamber (11) to the ventilation channel (9) if the brake pressure (C) overshoots a predetermined maximum brake pressure.

3. The pressure-regulating valve (10) as claimed in claim 1 or 2, wherein the pressure-equalizing piston (8) is configured to open the fluidic connection from the first pressure-equalizing chamber (11) to the ventilation channel (9) if the predetermined settable pressure (R1) is undershot.

4. The pressure-regulating valve (10) as claimed in any one of the preceding claims, wherein the pressure-equalizing piston (8) has a first piston portion (8a), which faces toward the first pressure chamber (11), and a second piston portion (8b), which faces toward the second pressure chamber (12), wherein the first end surface (D4), which faces toward the first pressure chamber (11) and to which the brake pressure (C) can be applied, of the first piston portion (8a) as a valve seat is smaller than the second end surface (D3), which faces toward the second pressure chamber (12) and to which the predetermined settable pressure (R1) can be applied, of the second piston portion (8b).

5. The pressure-regulating valve (10) as claimed in claim 4, wherein the pressure-equalizing piston (8) is configured as a double cylinder.

6. The pressure-regulating valve (10) as claimed in any one of the preceding claims, wherein the predetermined settable pressure (R1) in the second pressure chamber (12) can be set by way of a supply pressure (R).

7. The pressure-regulating valve (10) as claimed in claim 6, wherein the pressure-regulating valve (10) has a third pressure chamber (13), to which the supply pressure (R) can be applied, and a piston valve (1), wherein the piston valve (1) is configured to open a fluidic connection between the third pressure chamber (13) and the second pressure chamber (12) if a pressure in the third pressure chamber (13) owing to the supply pressure (R) is lower than the predetermined settable pressure (R1), and to shut off the fluidic connection between the third pressure chamber (13) and the second pressure chamber (12) by means of a valve seat (5) if the pressure in the third pressure chamber (13) is higher than or equal to the predetermined settable pressure (R1).

8. The pressure-regulating valve (10) as claimed in claim 7, wherein the pressure-regulating valve (10) has a fourth pressure chamber (14) which is fluidically connected to the second pressure chamber (12) via a channel (4) extending through the piston valve (1), wherein the third pressure chamber (13) is arranged between the second pressure chamber (12) and the fourth pressure chamber (14), and a flat diaphragm (2) which is arranged in the third pressure chamber (13) and through which the piston valve (1) extends allows a fluidic connection between the third pressure chamber (13) and the fourth pressure chamber (14).

9. The pressure-regulating valve (10) as claimed in claim 7 or 8, wherein the piston valve (1) is subjected to pressure loading in an axial direction by means of a spring element (7).

10. The pressure-regulating valve (10) as claimed in any one of claims 6 to 9, wherein the predetermined settable pressure (R1) is substantially 20% of the supply pressure (R).

11. A pneumatic control valve (20) or relay valve for a brake control system of a rail vehicle, having a pneumatic pressure-regulating valve (10) as claimed in any one of claims 1 to 10.

## Revendications

1. Soupape de régulation de pression (10) pneumatique pour un système de commande de frein d'un véhicule sur rails, présentant :
un premier espace de pression (11) pouvant être alimenté en une pression de freinage (C) et un deuxième espace de pression (12) pouvant être alimenté en une pression (R1) réglable prédéterminée,
dans lequel le premier espace de pression (11) et le deuxième espace de pression (12) sont rendus étanches l'un contre l'autre par le biais d'un piston de compensation de pression (8), et
dans lequel le piston de compensation de pression (8) est réalisé afin d'ouvrir une liaison fluidique du premier espace de pression (11) à un canal de ventilation (9) lorsque l'action de pression de la pression sur le piston de compensation de pression (8) dans le premier espace de pression (11) est supérieure à l'action de pression de la pression sur le piston de compensation de pression (8) dans le deuxième espace de pression (12).

2. Soupape de régulation de pression (10) selon la revendication 1, dans laquelle la pression (R1) réglable prédéterminée est prédéterminée de telle manière que le piston de compensation de pression (8) ouvre la liaison fluidique du premier espace de compensation de pression (11) au canal de ventilation (9) lorsque la pression de freinage (C) dépasse une pression de freinage maximale prédéterminée.

3. Soupape de régulation de pression (10) selon la revendication 1 ou 2, dans laquelle le piston de compensation de pression (8) est réalisé afin d'ouvrir la liaison fluidique du premier espace de compensation de pression (11) au canal de ventilation (9) lorsque la pression (R1) réglable prédéterminée n'est pas atteinte.

4. Soupape de régulation de pression (10) selon l'une quelconque des revendications précédentes, dans laquelle le piston de compensation de pression (8) présente une première section de piston (8a) tournée vers le premier espace de pression (11) et une seconde section de piston (8b) tournée vers le deuxième espace de pression (12), dans laquelle la première surface frontale (D4) tournée vers le premier espace de pression (11) et pouvant être alimentée en la pression de freinage (C) de la première section de piston (8a) comme siège de soupape est inférieure à la seconde surface frontale (D3) tournée vers le deuxième espace de pression (12) et pouvant être alimentée en la pression (R1) réglable prédéterminée de la seconde section de piston (8b).

5. Soupape de régulation de pression (10) selon la revendication 4, dans laquelle le piston de compensation de pression (8) est réalisé comme double cylindre.

6. Soupape de régulation de pression (10) selon l'une quelconque des revendications précédentes, dans laquelle la pression (R1) réglable prédéterminée est réglable dans le deuxième espace de pression (12) par le biais d'une pression d'alimentation (R).

7. Soupape de régulation de pression (10) selon la revendication 6, dans laquelle la soupape de régulation de pression (10) présente un troisième espace de pression (13) pouvant être alimenté en la pression d'alimentation (R) et une soupape à piston (1), dans laquelle la soupape à piston (1) est réalisée afin d'ouvrir une liaison fluidique entre le troisième espace de pression (13) et le deuxième espace de pression (12) lorsqu'une pression dans le troisième espace de pression (13) par la pression d'alimentation (R) est inférieure à la pression (R1) réglable prédéterminée, et de bloquer la liaison fluidique entre le troisième espace de pression (13) et le deuxième espace de pression (12) par le biais d'un siège de soupape (5) lorsque la pression dans le troisième espace de pression (13) est supérieure ou égale à la pression (R1) réglable prédéterminée.

8. Soupape de régulation de pression (10) selon la revendication 7, dans lequel la soupape de régulation de pression (10) présente un quatrième espace de pression (14) qui est relié par le biais d'un canal (4) qui traverse le piston de soupape (1), de manière fluidique au deuxième espace de pression (12), dans laquelle le troisième espace de pression (13) est agencé entre le deuxième espace de pression (12) et le quatrième espace de pression (14) et une membrane plate (2) agencée dans le troisième espace de pression (13), par laquelle la soupape de piston (1) s'étend, permet une liaison fluidique entre le troisième espace de pression (13) et le quatrième espace de pression (14).

9. Soupape de régulation de pression (10) selon la revendication 7 ou 8, dans laquelle la soupape de piston (1) est alimentée en pression par le biais d'un élément de ressort (7) dans le sens axial.

10. Soupape de régulation de pression (10) selon l'une quelconque des revendications 6 à 9, dans laquelle la pression (R1) réglable prédéterminée s'élève sensiblement à 20 % de la pression d'alimentation (R).

11. Soupape de commande pneumatique (20) ou soupape relais pour un système de commande de frein d'un véhicule sur rails présentant une soupape de régulation de pression (10) pneumatique selon l'une quelconque des revendications 1 à 10.
